# EUROPEAN PATENT SPECIFICATION

(11) **EP 0 925 249 B1**
(45) Date of publication and mention of the grant of the patent: **02.01.2003**
(21) Application number: 96926122.1
(22) Date of filing: 25.07.1996
(51) Int. Cl.: B65H 23/038, B65G 39/071

(54) **ACTIVE DISK GUIDE**
AKTIVER PLATTENANTRIEB
DISQUE DE GUIDAGE ACTIF

(43) Date of publication of application: 30.06.1999
(73) Proprietor: THE GOODYEAR TIRE & RUBBER COMPANY, Akron, Ohio 44316-0001 (US)
(72) Inventor: MURRAY, Thomas, Alan, Akron, OH 44333 (US); RING, Ralph, Damon, Akron, OH 44319 (US)
(74) Representative: Leitz, Paul
(86) International application number: US9612178
(87) International publication number: WO98004488

(56) References cited:
- EP-A- 0 110 670
- DE-U- 8 025 417
- FR-A- 1 441 479
- GB-A- 954 976
- US-A- 3 244 418
- US-A- 3 273 696
- US-A- 5 244 435

## Description

### Technical Field

The present invention concerns the art of methods and apparatuses for guiding strip components on a conveyor system, and more specifically to methods and apparatuses for electronically sensing and dynamically shifting and steering the strip components to a desired transverse position.

### Background Art

In the past, when a strip component was conveyed by a conveyor, the conveyor system either did not guide the component to align it with the conveyor, or the conveyor system had guides that kept the component aligned with the conveyor. If the component was not guided, it was possible that the component would not be aligned with the conveyor when the component reached its destination. If physical guides such as side guide rails were used, the sides of the component were subject to damage due to contact with the guide rails.

Although guiding a strip component carried by a conveyor is not the same as guiding a belt, a belt roller, described in U.S. Patent No. 3,273,696 to Thurston, utilized an assembly of angled disks rotatably mounted on a rotatable shaft to maintain the position of a belt. When the shaft was rotated, the angle of engagement of the disks with the belt surface was changed. One embodiment of the invention used a sensing device to measure belt displacement. However, the problem was that this assembly of angled disks was unable to provide an instantaneous lateral adjustment. Lateral movement of the assembly was not necessary because the belt was wrapped around a significant portion of the disks which allowed more contact time with the belt to steer the belt. In a conveyor system for strip components, such an apparatus would contact the strip component to be guided along a small portion of each disk, thereby reducing the contact time for guiding and seriously limit the steering capability of the system.

Guiding a strip component such as a tire tread utilizing an assembly of angled disks was also described in Great Britain patent GB-A-954 9756 where the angled disks were positioned along the path of the conveyor for adjusting the lateral position of the tread.

Another means for adjusting a feed roll in response to edge sensing is shown and described in U.S. Patent No. 3,244,418 wherein the feed roll is moved axially by a threaded end of a motor shaft driven by a reversible electric motor.

In most other guiding systems the sheet or strip to be guided was required to be in web tension which is not desirable especially with extruded unreinforced sheets or strips of elastomeric material used in the manufacture of tires. Guidance systems also required extensive space consuming equipment whereas in tire building equipment space is limited.

Applicants recognized the need for a steering apparatus that could provide an instantaneous shifting adjustment as well as a prolonged steering action without using guide rails that could damage the strip component being conveyed.

The present invention contemplates a new and improved guiding system which is compact, simple in design, effective in use, and solves the problem by overcoming the foregoing difficulties and others while providing better and more advantageous overall results.

### Disclosure of Invention

In accordance with the present invention, a conveyor system, a method and a disk guide apparatus for steering and conveying an associated strip component on a conveying means are provided as defined in the appended claims.

One advantage of the present invention is that axial movement of the shaft provides instantaneous lateral adjustments in the position of the strip component.

Another advantage of the present invention is that the component is guided from the bottom of the component only, thereby not damaging the sides of the component.

Another advantage of the present invention is that the position of the component is determined without contacting and damaging the edges of the component.

Another advantage of the present invention is that a continuous component may be guided without damaging the component.

Another advantage of the present invention is that the shaft turning apparatus is compact and provides both steering and shifting of the disk guide.

Another advantage of the present invention is that the disk guide may guide a series of individual components.

Another advantage of the present invention is that it is operable with a minimum web tension of the strip or sheet component.

Still other benefits and advantages of the invention will become apparent to those skilled in the art to which it pertains upon a reading and understanding of the following detailed specification.

### Brief Description of Drawings

The invention may take physical form in certain parts and arrangement of parts, a preferred embodiment of which will be described in detail in this specification and illustrated in the accompanying drawings which form a part hereof and herein:
Figure 1 is a plan view of a portion of a conveyor system containing an active disk guide embodying the invention for steering an associated strip component;
Figure 2 is a cross sectional view of the active disk guide along line 2-2 of Figure 1; and,
Figure 3 is an elevation of the active disk guide taken along lines 3-3 of Figure 1.

### Detailed Description of the Invention

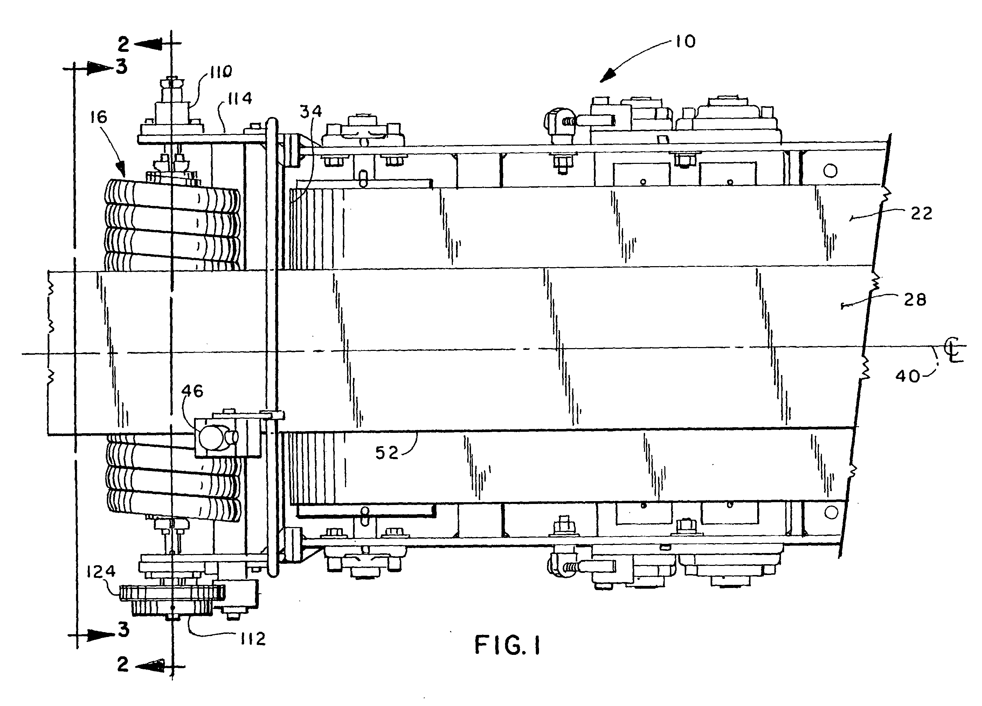

Referring now to the drawings wherein the showings are for purposes of illustrating a preferred embodiment of the invention only and not for purposes of limiting the same, Figure 1 shows a plan view of a conveyor system 10 that includes an active disk guide 16. The conveyor system preferably has a conveyor belt 22 to convey a strip or sheet component 28 such as a strip or sheet of rubber from an extruder to an applicator. The active disk guide 16, located beyond an end 34 of the conveyor belt 22, centers the component 28 along a center line 40 of the conveyor belt 22 by an optical edge sensor 46. As the component 28 is conveyed along the conveyor belt 22, the optical sensor 46 senses the position of an edge 52 of the component relative to the conveyor. Preferably, the optical sensor 46 is positioned to detect whether the edge 52 of the component 28 is outside a predetermined position that is based upon the width of the component. The optical sensor 46 is connected to a control apparatus, which operates the active disk guide 16. The active disk guide 16 may be used to steer the component 28, thereby aligning the component with the center line 40 of the conveyor belt 22. This edge guiding may be replaced by a center guiding system which requires another optical sensor at an opposite edge of the component 28.

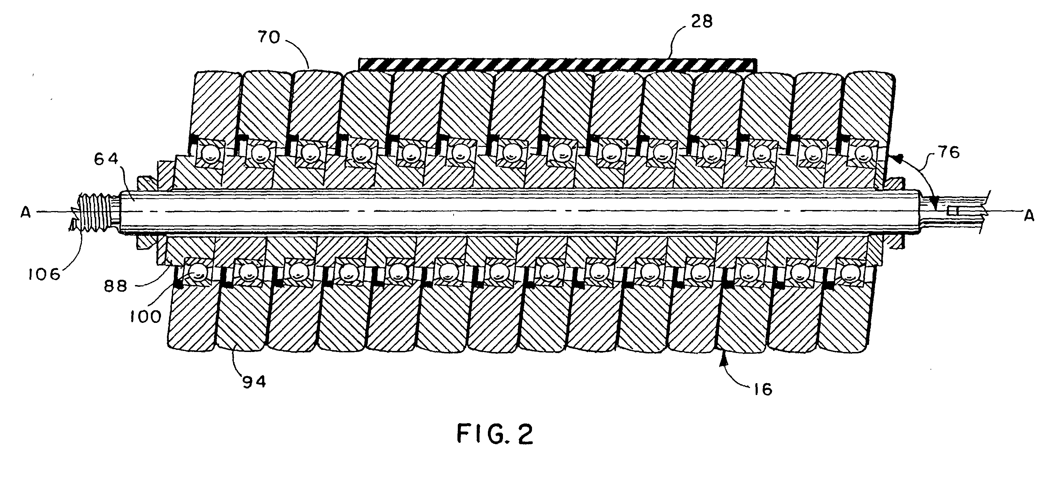

As shown in Figure 2 the active disk guide 16 includes a shaft 64 and a series of disks 70. Each of the disks 70 is rotatably mounted on a hearing 82 and tilted or canted at an angle 76 slightly less than 90 degrees. In the preferred embodiment of the present invention, the disks 70 are tilted at an angle of 85 degrees with respect to the axis A-A of the shaft 64, although a wider range of angles may also be employed, preferably between 30 and 89 degrees. When the shaft 64 is rotated, the orientation of the disks 70 changes, ranging from being tilted to the right as shown in Figure 2 to being tilted in the opposite direction. The disks 70 maintain their fixed angle 76 with respect to the shaft axis A-A. but the orientation of the disks changes as the shaft is rotated about its axis A-A. Each of the disks 70 preferably includes an inner bearing 88 and an outer disk 94. The inner bearing 88 is mounted on the shaft 64 for rotation with the shaft as by keys (not shown), and the outer disk 94 is rotatably supported on the inner bearing 88. The bearing 88 permits the free and independent rotation of the outer disk 94 about the shaft 64.

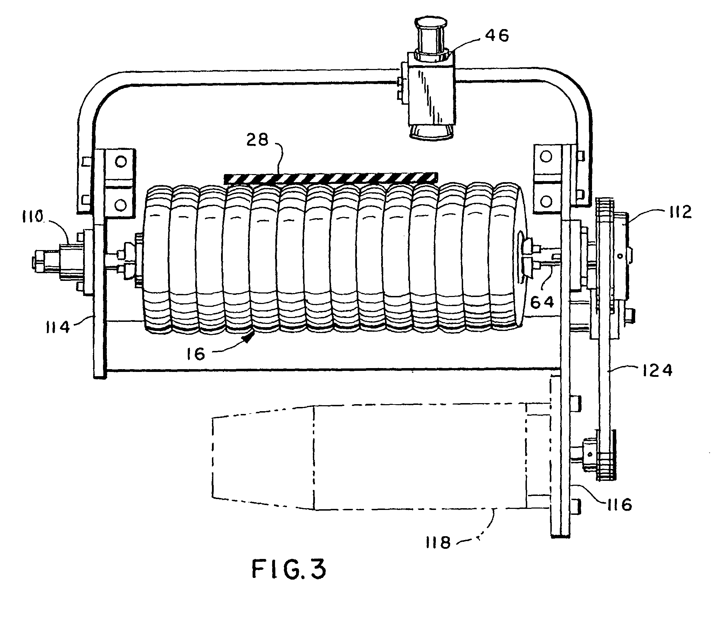

With respect to Figures 2 and 3, one end 106 of the shaft 64 is preferably threaded. The threaded end 106 is screwed into a stationery threaded bushing 110 mounted on a frame member 114. A servo motor 118 which is also mounted on another frame member 116 has a pulley for moving a belt 124 wrapped around a second pulley 112 mounted on the shaft 64. Rotation of the motor 118 causes rotation of the shaft 64 changing the orientation of the disks 70 and causes the strip component 28 to be steered. Because the shaft 64 is threaded in the hushing 110, rotation of the pulley 112 also causes the shaft to be moved in an axial direction the distance the threaded end 106 is moved due to rotation of the pulley. The threads at the threaded end 106 of the shaft 64 are preferably at a one degree pitch. The shaft 64 preferably begins at a neutral position and rotates about the axis A-A 90 degrees in each direction, thereby causing the disk guide 16 to go from a neutral position to full steer right or full steer left. Turning of the shaft 64 over an angle of 90 degrees also moves the shaft axially one quarter of an inch because the shaft end 106 is threaded in the bushing 110. The immediate axial movement of the shaft 64 enables the strip component 28 to be moved transversely as the strip component passes over the active disk guide 16. Servo motor 118 acts in response to signals from the control apparatus based upon the location of the component 28 as determined by the optical sensor 46.

Although a conveyor belt 22 is illustrated in Figure 1, the active disk guide 16 may also be used with a conveyor system 10 that consists solely of rollers that allows the strip component 28 to roll with the aid of gravity, or any other suitable conveyor system.

While a certain representative embodiment and details have been shown for the purpose of illustrating the invention, it will he apparent to those skilled in the art that various changes and modifications may be made therein without departing from the scope of the invention.

## Claims

1. A conveyor system (16) for conveying and steering an associated strip component (28) comprising conveying means (22) for carrying said component (28) longitudinally of said system (10,) an active disk guide (16) downstream of said conveying means (22) for supporting and steering said component (28) **characterized by** the combination including a shaft (64), having a plurality of guide disks (70) downstream of said conveying means (22) rotatably mounted on said shaft (64) and canted an angle (76) to the axis A-A of said shaft (64), means for rotating the same said shaft (64) to select the angle (76) of engagement of said disks (70) with said component (28) and means for moving the same said shaft (64) axially in addition to said means for rotating the same said shaft (64) to provide immediate shifting of said component (28) in a desired direction.

2. The conveyor system of claim 1 further **characterized by** said means for moving said shaft (64) axially includes a threaded portion (106) on said shaft (64) engageable with a stationary threaded bushing (110) for moving said shaft (64) axially upon rotation of said shaft (64).

3. The conveyor system of claim 1 further **characterized by** a sensor (46) for sensing the location of said associated components (28) relative to said conveying means (22) and guide disk control means (58) for controlling axial and rotational movement of said shaft (64) connected to said sensor (46) and to said means (118) for rotating said shaft (64).

4. The conveyor system of claim 3 further **characterized by** said sensor (46) being positioned adjacent the exit end (34) of said conveying means (22).

5. The conveyor system of claim 4 further **characterized by** said sensor (46) being located for sensing the position of an edge (52) of said strip components (28).

6. The conveyor system of claim 1 further **characterized by** said conveying means (22) including a conveyor belt (22) for carrying said strip component (28).

7. The conveyor system of claim 1 further **characterized by** said guide disks (70) being canted to the axis A-A of said shaft (64) at an angle (76) of between 30 degrees and 89 degrees.

8. The conveyor system of claim 7 further **characterized by** said angle (76) being about 85 degrees.

9. A method of conveying and steering an associated strip component (28) from a transverse position on a conveying means (22) a to predetermined transverse position on an active guide disk (16) downstream of said conveying means (22), said guide disk (16) having a shaft (64) and canted at an angle (76) to the axis A-A of said shaft (64) **characterized by** rotating the same said shaft (64) with a plurality of guide disks (70) rotatably mounted on said shaft (64) to select the desired angle (76) of engagement of said disks (70) with said component (28) and simultaneously moving the same said shaft (64) axially to provide immediate steering of said component (28) in the desired direction.

10. The method of claim 9 wherein said transverse position on said conveying means (22) is determined by a sensor (46) further **characterized by** rotating the same said shaft (64) in response to signals from said sensor (46) as to the transverse position of said strip component (28) on said conveying means.

11. The method of claim 9 wherein the same said shaft (64) has a threaded portion (106) engageable with a stationary threaded bushing (110) for moving said shaft (64) axially upon rotation of said shaft (64) further **characterized by** rotating said shaft (64) a predetermined angle to provide the desired axial movement of the shaft (64) in addition to the desired angle (76) of engagement.

12. A disk guide apparatus for steering and conveying an associated strip component (28) on an associated conveying means (22) **characterized by** the combination of a shaft (64) located downstream of said conveying means (22) and rotatable about a shaft axis A-A having a plurality of guide disks (70) rotatably mounted on said shaft (64) and canted at an angle (76) to said shaft axis A-A, means for rotating the same said shaft (64) to select the angle (76) of engagement of said disks (70) with said component (28) by means for rotating the same said shaft (64) about said shaft axis A-A to provide immediate shifting of said component (28) in a desired direction.

## Patentansprüche

1. Transporteinrichtung (16) zum Transportieren und Lenken einer zugeordneten Bandkomponente (28) mit einem Transportmittel (22) zum Tragen der Komponente (28) längs der Einrichtung (10), einer aktiven Scheibenführung (16), die zum Stützen und Lenken der Komponente (28) in Transportrichtung unterhalb des Transportmittels (22) gelegen ist, **gekennzeichnet durch** die Zusammenstellung, die eine Welle (64) mit mehreren Führungsscheiben (70), die in Transportrichtung unterhalb des Transportmittels (22) gelegen sind, drehbar auf der Welle (64) angebracht sind und um einen Winkel (76) zur Achse A-A der Welle (64) verkantet sind, ein Mittel zum Drehen derselben Welle (64), um den Winkel (76) des Eingriffs der Scheiben (70) mit der Komponente (28) auszuwählen, und zusätzlich zu dem Mittel zum Verdrehen derselben Welle (64) ein Mittel zum axialen Bewegen derselben Welle (64) aufweist, um eine sofortige Verschiebung der Komponente (28) in eine gewünschten Richtung zu schaffen.

2. Transporteinrichtung nach Anspruch 1, ferner **dadurch gekennzeichnet, dass** das Mittel zum axialen Bewegen der Welle (64) einen Gewindeabschnitt (106) auf der Welle (64) aufweist, der mit einem stationären Gewindelager (110) in Eingriff bringbar ist, um die Welle (64) bei Rotation der Welle (64) axial zu bewegen.

3. Transporteinrichtung nach Anspruch 1, ferner **gekennzeichnet durch** einen Sensor (46) zum Detektieren der Lage der zugeordneten Komponenten (28) relativ zum Transportmittel (22) und **durch** ein Scheibenführungssteuerungsmittel (58) zum Steuern der axialen Bewegung und der Drehbewegung der Welle (64), das mit dem Sensor (46) und mit dem Mittel (118) zum Drehen der Welle (64) verbunden ist.

4. Transporteinrichtung nach Anspruch 3, ferner **dadurch gekennzeichnet, dass** der Sensor (46) nahe dem Ausgangsende (34) des Transportmittels (22) gelegen ist.

5. Transporteinrichtung nach Anspruch 4, ferner **dadurch gekennzeichnet, dass** der Sensor (46) so gelegen ist, dass er die Lage eines Randes (52) der Bandkomponenten (28) detektiert.

6. Transporteinrichtung nach Anspruch 1, ferner **dadurch gekennzeichnet, dass** das Transportmittel (22) ein Transportband (22) zum Tragen der Bandkomponente (28) aufweist.

7. Transporteinrichtung nach Anspruch 1, ferner **dadurch gekennzeichnet, dass** die Führungsscheiben (70) um einen Winkel (76) zwischen 30 Grad und 89 Grad zur Achse A-A der Welle (64) verkantet sind.

8. Transporteinrichtung nach Anspruch 7, ferner **dadurch gekennzeichnet, dass** der Winkel (76) ungefähr 85 Grad beträgt.

9. Verfahren zum Transportieren und Lenken einer zugeordneten Bandkomponente (28) von einer Querlage auf einem Transportmittel (22) in eine vorbestimmte Querlage auf einer in Transportrichtung unterhalb des Transportmittels (22) gelegenen aktiven Scheibenführung (16), die eine Welle (64) aufweist und um einen Winkel (76) zur Achse A-A der Welle (64) verkantet ist, **gekennzeichnet durch** ein Verdrehen derselben Welle (64) mit mehreren, auf der Welle (64) drehbar angebrachten Führungsscheiben (70), um den gewünschten Winkel (76) des Eingriffs der Scheiben (70) mit der Komponente (28) auszuwählen und gleichzeitig die selbe Welle (64) axial zu bewegen, um eine sofortige Lenkung der Komponente (28) in die gewünschte Richtung zu schaffen.

10. Verfahren nach Anspruch 9, wobei die Querlage auf dem Transportmittel (22) durch einen Sensor (46) festgestellt wird, ferner **gekennzeichnet durch** ein Verdrehen derselben Welle (64) in Ansprechen auf Signale vom Sensor (46) bezüglich der Querlage der Bandkomponente (28) auf dem Transportmittel.

11. Verfahren nach Anspruch 9, wobei dieselbe Welle (64) einen Gewindeabschnitt (106) aufweist, der mit einem stationären Gewindelager (110) in Eingriff bringbar ist, um die Welle (64) bei Verdrehung der Welle (64) axial zu bewegen, ferner **gekennzeichnet durch** ein Verdrehen der Welle (64) um einen vorbestimmten Winkel, um zusätzlich zum gewünschten Eingriffswinkel (76) eine gewünschte axiale Bewegung der Welle (64) zu schaffen.

12. Scheibenführungsvorrichtung zum Lenken und Transportieren einer zugeordneten Bandkomponente (28) auf einem zugeordneten Transportmittel (22), **gekennzeichnet durch** die Zusammenstellung von einer Welle (64), die in Transportrichtung unterhalb des Transportmittels (22) gelegen ist, um eine Wellenachse A-A verdrehbar ist und mehrere Führungsscheiben (70) aufweist, die auf der Welle (64) drehbar angebracht sind und um einen Winkel (76) zur Wellenachse A-A verkantet sind, einem Mittel zum Verdrehen derselben Welle (64), um den Winkel (76) des Eingriffs der Scheiben (70) mit der Bandkomponente (28) auszuwählen **durch** ein Mittel zum Verdrehen derselben Welle (64) um die Wellenachse A-A, um eine sofortige Verschiebung der Komponente (28) in eine gewünschte Richtung zu schaffen.

## Revendications

1. Système de transport (16) pour transporter et guider un composant associé en forme de bande (28), comprenant un moyen de transport (22) pour supporter ledit composant (28) en direction longitudinale dudit système (10), un disque de guidage actif (16) en aval dudit moyen de transport (22) pour supporter et guider ledit composant (28), **caractérisé par** la combinaison englobant un arbre (64) comportant plusieurs disques de guidage (70) en aval dudit moyen de transport (22) monté en rotation sur ledit arbre (64) et disposé en inclinaison en formant un angle (76) par rapport à l'axe A-A dudit arbre (64), un moyen pour faire tourner ledit arbre (64) dans le but de sélectionner l'angle (76) de mise en contact desdits disques (70) avec ledit composant (28), et un moyen pour déplacer ledit arbre (64) en direction axiale en plus dudit moyen pour faire tourner ledit arbre (64), afin de procurer un déplacement immédiat dudit composant (28) dans la direction désirée.

2. Système de transport selon la revendication 1, **caractérisé en outre par le fait que** ledit moyen pour déplacer ledit arbre (64) englobe, en direction axiale, une portion filetée (106) sur ledit arbre (64) apte à s'engrener avec une douille stationnaire taraudée (110) afin de déplacer ledit arbre (64) en direction axiale lors de la rotation dudit arbre (64).

3. Système de transport selon la revendication 1, **caractérisé par** un détecteur (46) pour détecter la position desdits composants associés (28) par rapport audit moyen de transport (22) et par un moyen de commande du disque de guidage (58) pour commander le mouvement axial et rotatif dudit arbre (64) en liaison avec ledit détecteur (46) et avec ledit moyen (118) pour faire tourner ledit arbre (64).

4. Système de transport selon la revendication 3, **caractérisé en outre par le fait que** ledit détecteur (46) est disposé en position adjacente à l'extrémité de sortie (34) dudit moyen de transport (22).

5. Système de transport selon la revendication 4, **caractérisé en outre par le fait que** ledit détecteur (46) est disposé de façon à détecter la position du bord (52) desdits composants (28) en forme de bande.

6. Système de transport selon la revendication 1, **caractérisé en outre par le fait que** ledit moyen de transport (22) englobe une courroie transporteuse (22) pour transporter ledit composant (28) en forme de bande.

7. Système de transport selon la revendication 1, **caractérisé en outre par le fait que** lesdits disques de guidage (70) sont disposés en inclinaison par rapport à l'axe dudit arbre (64) en formant un angle (76) entre 30 degrés et 89 degrés.

8. Système de transport selon la revendication 7, **caractérisé en outre par le fait que** ledit angle (76) représente environ 85 degrés.

9. Procédé de transport et de guidage d'un composant (28) associé en forme de bande depuis une position transversale sur un moyen de transport (22) jusqu'à une position transversale prédéterminée sur un disque de guidage actif (16) en aval dudit moyen de transport (22), ledit disque de guidage (16) possédant un arbre (64) étant disposé en inclinaison en formant un angle (76) par rapport à l'axe A-A dudit arbre (64), **caractérisé par** la mise en rotation dudit arbre (64) à l'aide de plusieurs disques de guidage (70) montés en rotation sur ledit arbre (64) afin de sélectionner l'angle désiré (76) de mise en contact desdits disques (70) avec ledit composant (28) et par le déplacement simultané dudit arbre (64) en direction axiale pour procurer un guidage immédiat dudit composant (28) dans la direction désirée.

10. Procédé selon la revendication 9, dans lequel ladite position transversale sur ledit moyen de transport (22) est déterminée par un détecteur (46), **caractérisé en outre par** la mise en rotation dudit arbre (64) en réponse à des signaux émis par ledit détecteur (46) en ce qui concerne la position transversale dudit composant (28) en forme de bande sur ledit moyen de transport.

11. Procédé selon la revendication 9, dans lequel ledit arbre (64) possède une portion filetée (106) apte à s'engrener avec une douille stationnaire (110) afin de déplacer ledit arbre (64) en direction axiale lors de la rotation dudit arbre (64), **caractérisé en outre par** la mise en rotation dudit arbre (64) en formant un angle prédéterminé pour procurer le mouvement axial désiré de l'arbre (64) en plus de l'angle désiré (76) de mise en contact.

12. Appareil de guidage en forme de disque pour guider et transporter un composant associé (28) en forme de bande sur un moyen de transport associé (22), **caractérisé par** la combinaison d'un arbre (64) disposé en aval dudit moyen de transport (22) et rotatif autour d'un axe A-A, possédant plusieurs disques de guidage (70) montés en rotation sur ledit arbre (64) et disposés en inclinaison en formant un angle (76) par rapport audit axe A-A, et d'un moyen pour faire tourner ledit arbre (64) afin de sélectionner l'angle (76) de mise en contact desdits disques (70) avec ledit composant (28) par la mise en rotation dudit arbre (64) autour dudit axe A-A afin de procurer un déplacement immédiat dudit composant (28) dans une direction désirée.
